# EUROPÄISCHE PATENTSCHRIFT

(11) **EP 0 805 340 B1**
(45) Veröffentlichungstag und Bekanntmachung des Hinweises auf die Patenterteilung: **02.07.2003**
(21) Anmeldenummer: 97106438.1
(22) Anmeldetag: 18.04.1997
(51) Int. Cl.: G01D 11/28, G01D 13/22, G12B 11/04

(54) **Zeigerinstrument**
Pointer instrument
Aiguille de cadran indicateur

(30) Priorität: 02.05.1996 DE 19617553
(43) Veröffentlichungstag der Anmeldung: 05.11.1997
(73) Patentinhaber: ROBERT BOSCH GMBH, 70442 Stuttgart (DE)
(72) Erfinder: Sybrichs, Ralf, 71254 Ditzingen (DE); Herzog, Bernhard Dr., 70619 Stuttgart (DE)

(56) Entgegenhaltungen:
- EP-A- 0 894 244
- DE-A- 4 121 607
- FR-A- 2 708 732
- US-A- 5 372 087
- PATENT ABSTRACTS OF JAPAN vol. 96, no. 2, 29.Februar 1996 & JP 07 286868 A (NIPPONDENSO CO LTD), 31.Oktober 1995,

## Beschreibung

### Stand der Technik

Die Erfindung geht aus von einem Zeigerinstrumentwie es aus bereits aus der DE 38 37 295 C2 bekannt ist. Hierbei weist das Zeigerinstrument einen auf einer Zeigerwelle angeordneten Zeiger auf, wobei im Zeigerinneren eine Lichtquelle angebracht ist, die der Zeigerbeleuchtung dient. Damit stellt der Zeiger dieses Zeigerinstrumentes einen aktiven Leuchtzeiger dar. Hierbei ist eine Anschlußhülse zwischen Meßwerk und Zeiger drehfest angeordnet, wobei die dem Zeiger zugeordnete Lichtquelle mit der Anschlußhülse über die Zeigernabe kontaktiert ist. Bei dieser Ausführungsform ist also zunächst eine Verbindung zwischen der Elektronik und einem ersten Teil des Zeigers, dem Drehübertrager, vorzusehen und weiterhin eine Verbindung zwischen dem als Drehübertrager dienenden ersten Teil des Zeigers und der Zeigerfahne mit der eigentlichen Lichtquelle vorzusehen.

Aus der DE 41 21 607 A1 ist ein Anzeigegerät für Kraftfahrzeuge bekannt, bei der in eine über einer Skalenscheibe angeordnete Zeigernadel Licht eingekoppelt wird. In einem Ausführungsbeispiel verfügt ein Nadelhalter über eine Platine, an der ein lichtabgebendes Element angeordnet ist, das Licht in eine Zeigernadel abgibt, die von der Nadelkappe gehalten wird. Aus der US 5,372,087 ist ein analoges Zeigerelement mit einem selbstleuchtenden Zeiger bekannt, bei der eine Zeigernadel über ein flexibles Leiterelement mit einem Strom versorgt wird. Auf der Zeigernadel sind zahlreiche Lichtquellen angeordnet, deren Licht in Richtung einer Zeigerkappe und damit in Richtung eines Betrachters gelenkt wird. Aus der FR 2 708 732 A1 ist eine Anzeigevorrichtung für ein Fahrzeugarmaturenbrett bekannt, wobei der Zeiger aus einem lichtleitenden Material gefertigt ist, in das von einer außerhalb dem Zeiger angeordneten Lichtquelle Licht eingekoppelt und insbesondere durch einen an dem Zeigerende vorgesehenen Reflektor in Richtung eines Betrachters gelenkt wird. Ferner verfügt der Zeiger über ein Ausgleichsgewicht, das an dem der Zeigerfahne gegenüberliegenden Ende angeordnet ist. Aus der JP 72 86 868 (Abstract) ist eine Zeigervorrichtung bekannt, bei der eine Zeigernabe und eine Zeigerfahne einstückig ausgeführt sind und wobei an der Zeigernabe elektrische Anschlüsse zur Herstellung eines Kontaktes zu einem flexiblen Leiter vorgesehen sind.

Aus der nachveröffentlichten Druckschrift WO 97/40346, bei der die Vertragsstaaten Deutschland, Frankreich und Großbritannien benannt sind, ist ein Zeigerinstrument beschrieben, bei der in einem Ausführungsbeispiel ein LED-Chip auf einer Anschlusshülse befestigt ist, die auf der Zeigerwelle befestigt ist und den Zeiger hält. Die Anschlusshülse ist aus einem leitfähigen Kunststoffmaterial hergestellt und über einen flexiblen Leiter mit einer Leiterplatte kontaktiert.

### Vorteile der Erfindung

Bei dem erfindungsgemäßen Zeigerinstrument kann die zweite Verbindung zwischen Drehübertrager und Lichtquelle in der Zeigerfahne entfallen, da die Zeigernabe selbst die Lichtquelle trägt und zur Kontaktierung dient. Somit ist eine wesentlich einfachere Montage möglich, wodurch die Fertigungskosten wiederum herabgesetzt werden. Des weiteren ist durch den Wegfall einer zweiten Kontaktstelle eine wesentlich höhere Zuverlässigkeit des Zeigerinstrumentes gegeben.

Durch die Unteransprüche sind vorteilhafte Ausgestaltungen und Weiterbildungen des erfindungsgemäßen Zeigerinstrumentes gegeben. So kann beispielsweise durch das Anbringen des Ausgleichsgewichtes für den Zeiger an der Nabe nahe der Lagerstelle des Meßwerks die Belastung des Meßwerkes reduziert werden und das Zeiger-Design wesentlich freier gestaltet werden. Durch das Einbringen eines transparenten, elastischen Zwischenstückes wird wiederum die Lichteinkopplung in die Zeigerfahne verbessert. Letztendlich wird die Lichtausbeute dadurch erhöht, daß ein reflektierender Körper am äußeren Ende der Zeigerfahne aufgebracht wird.

### Zeichnung

Ausführungsbeispiele der Erfindung sind in der Zeichnung dargestellt und in der nachfolgenden Beschreibung näher erläutert. Es zeigen Figur 1 einen Schnitt durch einen oberen Bereich des erfindungsgemäßen Zeigerinstrumentes, Figur 2 die Zeigernabe mit Lichtquelle, Figur 3 den Abschnitt Zeigerfahne und Ausgleichsgewicht und Figur 4 einen Schnitt durch den oberen Bereich eines weiteren Ausführungsbeispieles des Zeigerinstrumentes.

### Beschreibung der Ausführungsbeispiele

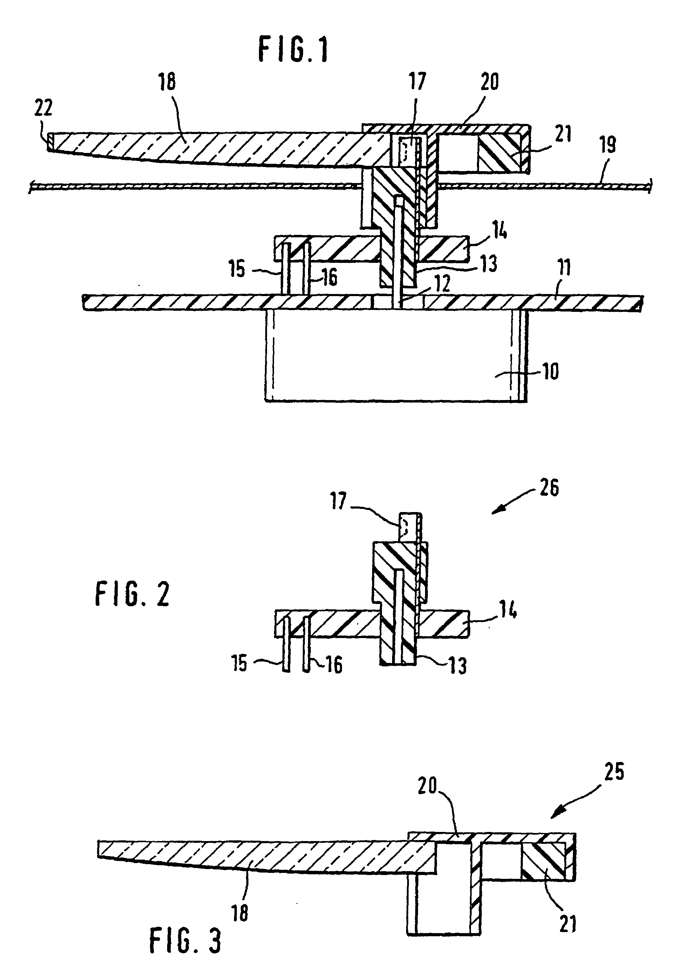

Figur 1 zeigt einen Schnitt durch den oberen Bereich eines Zeigerinstrumentes. Ein Schrittmotor 10 ist auf der Rückseite einer elektrischen Leiterplatte auf der Welle 12, die durch eine Öffnung der Leiterplatte 11 hindurchragt, sitzt die Nabe 13 als ein zum Zeiger gehörendes Teil. Die Nabe 13 ist über einen Flexleiter 14 und zwei Kontaktstifte 15 und 16 mit der Leiterplatte elektrisch kontaktiert. Auf der dem Betrachter zugewandten Stirnfläche der Nabe 13, die im wesentlichen einen zylindrischen Querschnitt hat, ist ein Leuchtmittel 17 in Form einer Leuchtdiode angebracht. Die Nabe 13 trägt weiterhin auf ihrer Stirnfläche die Zeigerfahne 18, die beispielsweise mittels Rastmittel auf der Nabe mechanisch befestigt ist. Aus der Sicht des Betrachters ist hinter der Zeigerfahne 18 ein Ziffernblatt 19 befestigt. Auf der dem Betrachter abgewandten Seite des Ziffernblattes 19 liegen die Leiterplatte mit Schrittmotor und den Flexleiter 14, sie sind damit für den Betrachter nicht zu sehen. Die Stirnseite der Nabe 13, welche das Leuchtmittel 17 trägt und an welcher die Zeigerfahne 18 verrastet ist, wird durch eine Abdeckkappe 20 in der Art umschlossen, daß die lichtleitende Zeigerfahne 18 in der hauptsächlichen Abstrahlrichtung des Leuchtmittels so fixiert ist, daß ein sehr großer Teil des Lichtes aus dem Leuchtmittel in die lichtleitende Zeigerfahne 18 eingekoppelt wird. In dem ersten Ausführungsbeispiel der Figur 1 ist die Abdeckkappe 20 hierbei so gestaltet, daß auf der der Zeigerfahne gegenüberliegenden Seite der Abdeckkappe ein Ausgleichsgewicht 21 angeordnet ist. Das äußere Ende der lichtleitenden Zeigerfahne 18 ist mit einer metallisch reflektierenden Folie 22 in der Art abgedeckt, daß die reflektierende Seite zur Zeigerfahne hin zeigt. Diese metallisch reflektierende Folie 22 ist beispielsweise mittels Heißprägen auf das Ende der Zeigerfahne aufgebracht. Die Kontaktierung der Leuchtdiode 17 erfolgt dabei über den Flexleiter 14 und die Kontaktstifte 15 und 16 mit der Leiterplatte 11.

Diese Ausführungsform des oberen Bereichs eines Zeigerinstrumentes erlaubt eine sehr einfache und kostengünstige Montage des Zeigerinstrumentes. So sind in den Figuren 2 und 3 die zu montierenden Baugruppen dargestellt, die dann durch einfaches Verrasten miteinander montiert werden.

Figur 2 zeigt die erste untere Baugruppe 26, welche zwischen Ziffernblatt 19 und Leiterplatte 11 angeordnet ist und aus der Nabe 13, dem Flexleiter 14, den Kontaktstiften 15 und 16 und dem Leuchtmittel 17 besteht.

Figur 3 zeigt hierbei eine zweite obere Baugruppe 25, welche auf der dem Betrachter zugewandten Seite des Ziffernblattes 19 liegt und aus der Zeigerfahne 18, der Abdeckkappe 20 und dem Ausgleichsgewicht 21 besteht.

Diese beiden Baugruppen 25 und 26 können fertig vormontiert werden und anschließend sehr einfach auf der Leiterplatte 11 mit dem rückwärtig angeordneten Schrittmotor 10 aufgebracht werden. Hierfür wird zunächst die erste untere Baugruppe 26 auf die Zeigerwelle 12 und damit auf das Meßwerk montiert. Anschließend wird das Ziffernblatt 19 aufgesetzt und dann die zweite obere Bauteilegruppe 25 mit seiner Abdeckkappe 20 über die Nabe 13 geschoben.

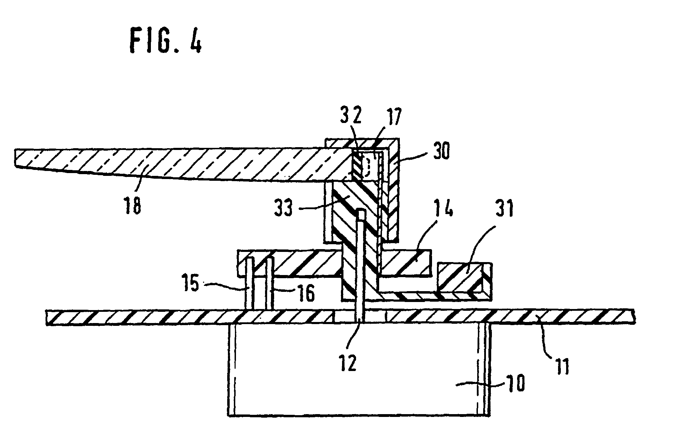

Figur 4 zeigt eine zweite Ausführungsform der Erfindung, wobei gleiche Bezugszeichen für gleiche Bauteile verwendet wurden und nicht nochmals näher erläutert werden sollen. Die elektrische Kontaktierung und die Anordnung von Leuchtmitteln 17 und Zeigerfahne 18 auf der dem Betrachter zugewandten Stirnseite der Nabe entspricht der Ausführung in Figur 1. Lediglich die Anordnung des Ausgleichsgewichtes 31 unterscheidet sich von der Ausführungsform gemäß Figur 1. In dieser Figur 4 wurde die Nabe 33 so gestaltet, daß sie das Ausgleichsgewicht 31 des Zeigers trägt. Damit kann das Ausgleichsgewicht vorteilhafterweise auf der dem Betrachter abgewandten Seite des Ziffernblattes, welches in Figur 4 nicht dargestellt ist, angeordnet sein. Hierdurch wird die Lagerbelastung des Meßwerkes reduziert und eine wesentlich höhere Vibrationsfestigkeit ereicht. Letztendlich kann die Abdeckkappe 30 wesentlich kleiner gestaltet werden, was sich wiederum positiv auf die zur Verfügung stehende Fläche des Ziffernblattes auswirkt.

Für eine möglichst verlustarme Lichtübertragung von der Leuchtdiode 17 zur Zeigerfahne 18 wird in den Zwischenraum ein Substrat 32 eingebracht, welches die unterschiedlichen Brechungszahlen ausgleicht. Dieses Substrat 32 kann beispielsweise eine Immersionsflüssigkeit, ein Silikongel oder ein elastisches Zwischenstück wie Silikonkautschuk oder ein thermoplastisches Polyurethan-Elastomer sein.

## Patentansprüche

1. Zeigerinstrument mit einem Ziffernblatt (19), mit einer auf einer drehbar gelagerten Nabe (13) befestigten Zeigerfahne (18), mit einem ebenfalls auf der Nabe (13) befestigen Leuchtmittel (17) und einer Abdeckkappe (20,30), welche auf der Nabe befestigbar ist, wobei die elektrische Kontaktierung des Leuchtmittels (17) mit einer rückseitig des Ziffernblattes befindlichen Leiterplatte (11) über einen flexiblen elektrischen Leiter (14) erfolgt und die Nabe (13), das Leuchtmittel (17) und der flexible elektrische Leiter (14) eine erste untere Baugruppe (26) bilden, auf die eine aus einem lichtleitendem Material bestehende Zeigerfahne (18) so montierbar ist, dass das von dem Leuchtmittel (17) gelieferte Licht in die Zeigerfahne (18) einstrahlt, wobei die Zeigerfahne (18) und die Abdeckkappe (20, 30) ein zweite obere Baugruppe (25) bilden, wobei die erste untere Baugruppe (26), die zweite obere Baugruppe (25) und das Zifferblatt (19) derart ausgeführt sind, dass als erstes die erste Baugruppe (26), dann das Zifferblatt (19) und anschließend die zweite Baugruppe (25) an dem Zeigerinstrument montierbar sind.

2. Zeigerinstrument nach Anspruch 1, wobei das Leuchtmittel (17) eine Leuchtdiode ist und auf die die dem Betrachter zugewandte Stirnfläche der Nabe (13) montiert ist.

3. Zeigerinstrument nach einem der Ansprüche 1 und 2, wobei die Stirnfläche der Nabe (13) mit der befestigten Zeigerfahne (18) und dem darauf montierten Leuchtmittel (17) durch die Abdeckkappe (20, 30), welche auf der Nabe (13) befestigbar ist, verdeckt ist.

4. Zeigerinstrument nach einem der vorherigen Ansprüche, wobei auf der der Zeigerfahne gegenüberliegenden Seite der Nabe (13) ein Ausgleichsgewicht (21, 31) angebracht ist.

5. Zeigerinstrument nach Anspruch 4, wobei das Ausgleichsgewicht (21, 31) an der Nabe (13) auf der dem Betrachter zugewandten Seite des Ziffernblattes in die Abdeckkappe (20) integriert ist.

6. Zeigerinstrument nach Anspruch 4, wobei das Ausgleichsgewicht an der Nabe (13) auf der dem Betrachter abgewandten Seite des Ziffernblattes (19) angeordnet ist.

7. Zeigerinstrument nach einem der vorherigen Ansprüche, wobei das Zeigerende der Zeigerfahne mit einer reflektierenden Folie (22) beschichtet ist.

8. Zeigerinstrument nach einem der vorherigen Ansprüche, wobei der flexible elektrische Leiter (14) mit der Leiterplatte über elektrischen Kontaktstifte (15, 16) kontaktiert ist.

9. Zeigerinstrument nach einem der vorherigen Ansprüche, wobei in einem Zwischenraum zwischen der Lichtquelle und der Zeigerfahne (18) ein Substrat zum Ausgleich unterschiedlicher Brechungszahlen angeordnet ist.

## Claims

1. Pointer instrument with a dial (19), with a pointer vane (18) fastened on a rotatably mounted hub (13), with a lighting means (17), likewise fastened on the hub (13) and a covering cap (20, 30), which can be fastened on the hub, the electrical contacting of the lighting means (17) with respect to a printed circuit board (11) located on the rear side of the dial taking place via a flexible electrical conductor (14), and the hub (13), the lighting means (17) and the flexible electrical conductor (14) forming a first, lower subassembly (26), onto which a pointer vane (18) consisting of a light-conducting material can be mounted in such a way that the light supplied by the lighting means (17) shines into the pointer vane (18), the pointer vane (18) and the covering cap (20, 30) forming a second, upper subassembly (25), the first, lower subassembly (26), the second, upper subassembly (25) and the dial (19) being configured in such a way that the first subassembly (26) can be mounted on the pointer instrument first, then the dial (19) and subsequently the second subassembly (25).

2. Pointer instrument according to Claim 1, the lighting means (17) being a light-emitting diode and being mounted on the end face of the hub (13) facing the viewer.

3. Pointer instrument according to either of Claims 1 and 2, the end face of the hub (13) with the fastened pointer vane (18) and the lighting means (17) mounted on it being covered by the covering cap (20, 30), which can be fastened on the hub (13).

4. Pointer instrument according to one of the preceding claims, a balancing weight (21, 31) being attached on the side of the hub (13) opposite from the pointer vane.

5. Pointer instrument according to Claim 4, the balancing weight (21, 31) at the hub (13) being integrated into the covering cap (20) on the side of the dial facing the viewer.

6. Pointer instrument according to Claim 4, the balancing weight at the hub (13) being arranged on the side of the dial (19) facing away from the viewer.

7. Pointer instrument according to one of the preceding claims, the pointer end of the pointer vane being coated with a reflective film (22).

8. Pointer instrument according to one of the preceding claims, the flexible electrical conductor (14) being contacted with respect to the printed circuit board via electrical contact pins (15, 16).

9. Pointer instrument according to one of the preceding claims, a substrate to compensate for different refractive indices being arranged in an intermediate space between the light source and the pointer vane (18).

## Revendications

1. Instrument indicateur comprenant un cadran (19), une aiguille indicatrice (18) fixée à un moyeu (13) monté tournant, un moyen d'éclairage (17) également fixé au moyeu et un capot de couverture (20, 30) qui peut être fixé sur le moyeu,
**caractérisé en ce que**
- le contact électrique du moyen d'éclairage (17) à un circuit imprimé (11) situé sur la face arrière du cadran (19) est assuré par un conducteur flexible (14),
- le moyeu (13), le moyen d'éclairage (17) et le conducteur flexible (14) constituent un premier groupe constructif (26) situé en bas et sur lequel peut être montée une aiguille indicatrice (18) faite d'un matériau conducteur de la lumière de manière à ce que la lumière fournie par le moyen d'éclairage (17) pénètre dans l'aiguille (18),
- l'aiguille (18) et le capot de couverture (20, 30) forment un second groupe constructif (25) situé en haut,
- le premier groupe (26), le second groupe (25) et le cadran (19) sont configurés de manière à ce que l'on peut monter successivement sur l'instrument indicateur, d'abord le premier groupe (26) puis le cadran gradué (19) et enfin le second groupe (25).

2. Instrument indicateur selon la revendication 1,
dans lequel
le moyen d'éclairage (17) est une diode luminescente, montée sur la face frontale du moyeu (13) tournée vers l'observateur.

3. Instrument selon la revendication 1 ou 2,
dans lequel
la face frontale du moyeu (13) portant, fixée sur elle, l'aiguille (18) et le moyen d'éclairage (17) est recouverte par le capot de couverture (20, 30) qui peut être fixé au moyeu (13).

4. Instrument selon l'une des revendications précédentes,
dans lequel
sur le côté du moyeu (13) opposé à l'aiguille, est monté un poids d'équilibrage (21, 31).

5. Instrument selon la revendication 4,
dans lequel
le poids d'équilibrage (21, 31) situé sur le moyeu (13) du côté du cadran faisant face à l'observateur est intégré au capot de couverture (20).

6. Instrument selon la revendication 4,
dans lequel
le poids d'équilibrage est monté sur le moyeu (13), du côté du cadran à chiffres (19) éloigné de l'observateur.

7. Instrument selon l'une des revendications précédentes,
dans lequel
l'extrémité indicatrice de l'aiguille est revêtue d'une feuille réfléchissante (22).

8. Instrument selon l'une des revendications précédentes,
dans lequel
le conducteur électrique flexible (14) est relié au circuit imprimé par des broches de contact (15, 16).

9. Instrument selon l'une des revendications précédentes,
dans lequel
un substrat est monté dans l'espace intermédiaire séparant la source de lumière et l'aiguille (18), pour compenser des indices de réfraction différents.
